(19) Europäisches Patentamt
European Patent Office
Office européen des brevets

(11) Veröffentlichungsnummer: **0 244 362 B1**

# (12) EUROPÄISCHE PATENTSCHRIFT

(45) Veröffentlichungstag der Patentschrift: **13.07.94**

(51) Int. Cl.$^{5}$: **C09K 15/32**

(21) Anmeldenummer: **87810266.4**

(22) Anmeldetag: **27.04.87**

## (54) Mit Aminoxysilanen stabilisierte Zusammensetzungen.

(30) Priorität: **01.05.86 US 858158**

(43) Veröffentlichungstag der Anmeldung:
**04.11.87 Patentblatt 87/45**

(45) Bekanntmachung des Hinweises auf die Patenterteilung:
**13.07.94 Patentblatt 94/28**

(84) Benannte Vertragsstaaten:
**BE DE FR GB IT NL**

(56) Entgegenhaltungen:
**US-A- 3 318 898**
**US-A- 3 448 136**

(73) Patentinhaber: **CIBA-GEIGY AG**
**Klybeckstrasse 141**
**CH-4002 Basel(CH)**

(72) Erfinder: **Ravichandran, Ramanathan**
**111 De Haven Drive**
**Apt. 125**
**Yonkers New York 10703(US)**
Erfinder: **Snead, Thomas E.**
**39 King Street**
**Dobbs Ferry New York 10522(US)**

**EP 0 244 362 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft bestimmte organische Materialien, welche mit Aminoxysilanen gegen oxidativen, thermischen und/oder aktinischen Abbau stabilisiert sind.

Organische Materialien, wie z.B. Kunststoffe und Harze, unterliegen thermischem, oxidativem und lichtinduziertem Abbau. In der Technik ist eine grosse Anzahl von Stabilisatoren für eine Vielzahl von Substraten bekannt. Die Wirksamkeit eines Stabilisators hängt unter anderem von der Art des Substrats, in welchem er eingesetzt wird, und vom jeweiligen Abbaumechanismus ab. Daher ist es im allgemeinen schwierig, für eine konkrete Anwendung den wirksamsten und ökonomischsten Stabilisator anzugeben.

So kann beispielsweise die Wirksamkeit eines Stabilisators, der die Flüchtigkeit einer Verbindung reduziert, darauf zurückgeführt werden, dass er einen Bindungsbruch der Substratmoleküle verhindert. Um eine geringe Versprödung oder die Erhaltung der Elastizität eines Polymeren oder eines Elastomeren zu gewährleisten, kann von einem Stabilisator verlangt werden, dass er übermässige Vernetzungsreaktionen und/oder Kettenabbruch verhindert. Um die Vergilbung zu unterbinden, müssen Reaktionen, die zu neuen Chromophoren führen, verhindert werden. Weiterhin müssen Probleme der Verarbeitungsstabilität und der Substratverträglichkeit beachtet werden.

Aus der US-A-3 448 136 sind eine Reihe von Aminoxysilanen und deren Verwendung als "Endblockierer" in der Siliziumchemie sowie deren Verwendung bei der Herstellung von Harzen, die als Komponenten von Metallschutzmitteln geeignet sind, bekannt. Pande et al. beschreiben in einem Artikel in "Chem. Ind. (London), 56 (1970)" die Herstellung von $(CH_3)_nSi(ONC_2H_5)_{4-n}$ mit n = 0-3, geben aber keine Verwendungsmöglichkeiten für diese Verbindungen an. Die Herstellung von (Dibenzylaminoxy)trimethylsilan in Zusammenhang mit einer Studie über den Metabolismus von Dibenzylamin wird von Beckett et al. (J. Pharm. Pharmac. 27, 659 (1975)) beschrieben. Eine Reihe von Patenten offenbaren Aminoxysilane und deren Verwendung bei der Herstellung von Organopolysiloxanen. Als repräsentative Patente seien US 3 379 659, US 3 318 898, US 3 441 583 und US 3 296 199 genannt.

Die Zusammensetzungen dieser Erfindung besitzen eine Vielzahl der gewünschten Eigenschaften, die auf die Anwesenheit von bestimmten Aminoxysilanen zurückzuführen sind. So schützen diese Silane eine Reihe von Substraten, wie z.B. Polyolefine, Elastomere und Schmiermittel gegen oxidativen und thermischen Abbau. Ferner sind sie sehr wirkungsvolle Farbverbesserer und Verarbeitungsstabilisatoren für Polyolefinzusammensetzungen, die Metallsalze von Fettsäuren und phenolische Antioxidantien enthalten können. Hauptsächlich können die Aminoxysilane dazu dienen, Verfärbungen zu vermindern, die auf die Gegenwart von phenolischen Antioxidantien und/oder auf die Verarbeitungsbedingungen zurückzuführen sind. Ferner schützen diese Verbindungen das organische Polymer direkt vor den Auswirkungen der Verarbeitungsbedingungen. Sie schützen auch solche Polyolefinzusammensetzungen, die gehinderte Amin-Lichtstabilisatoren oder Kombinationen von phenolischen Antioxidantien und Phosphiten enthalten, vor der Verfärbung.

Die vorliegende Erfindung betrifft Zusammensetzungen enthaltenend a) ein gegen oxidativen, thermischen und/oder aktinischen Abbau empfindliches synthetisches Polymer ohne Siliziumatome, oder ein natürlich vorkommendes oder synthetisches Mineralöl, oder ein tierisches oder pflanzliches Fett, Oel oder Wachs oder ein synthetisches Oel, Fett oder Wachs auf Ester-Basis und b) mindestens eine Verbindung der Formel I,

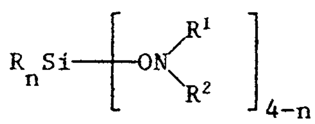

(I)

worin n die Zahl 0, 1, 2 oder 3 darstellt und R, $R^1$ und $R^2$ unabhängig voneinander Wasserstoff, $C_1$-$C_{36}$-Alkyl, $C_5$-$C_{12}$-Cycloalkyl, $C_7$-$C_9$-Aralkyl oder durch $C_1$-$C_{36}$-Alkyl substituiertes $C_7$-$C_9$-Aralkyl bedeuten.

R, $R^1$ und $R^2$ bedeuten als $C_1$-$C_{36}$-Alkyl zum Beispiel Methyl, Ethyl, n-Propyl, n-Butyl, tert-Butyl, n-Pentyl, n-Octyl, 2-Ethylhexyl, Decyl, Dodecyl oder Octadecyl. $C_1$-$C_{18}$-Alkyl, welches geradkettig oder verzweigt sein kann, ist bevorzugt. Besonders bevorzugt ist $C_1$-$C_6$-Alkyl, insbesondere Methyl und Ethyl.

R, $R^1$ und $R^2$ sind als $C_5$-$C_{12}$-Cycloalkyl beispielsweise Cyclopentyl, Cyclohexyl oder Cyclooctyl. Bevorzugt ist Cycloalkyl mit 5 bis 7 Kohlenstoffatomen, insbesondere Cyclopentyl und Cyclohexyl.

R, $R^1$ und $R^2$ können als unsubstituiertes oder durch $C_1$-$C_{36}$-Alkyl substituiertes $C_7$-$C_9$-Aralkyl insbesondere Phenylalkyl mit 7 bis 9 Kohlenstoffatomen bedeuten, wobei der Phenylring gegebenenfalls durch $C_1$-$C_{36}$-Alkyl, bevorzugt Methyl, substituiert sein kann. Beispiele sind Benzyl, α-Methylbenzyl und α,α-Dimethylbenzyl. Benzyl ist besonders bevorzugt.

n ist 0, 1, 2, oder 3 bevorzugt 0, 2 oder 3.

Bevorzugt bedeuten $R^1$ und $R^2$ unabhängig voneinander Wasserstoff, $C_1$-$C_{18}$-Alkyl, Cyclopentyl, Cyclohexyl, Benzyl, α-Methylbenzyl oder α,α-Dimethylbenzyl, insbesondere Benzyl.

R ist bevorzugt $C_1$-$C_{18}$-Alkyl.

Von besonderem Interesse sind Zusammensetzungen, worin die Verbindung der Formel I Trimethyl-(N,N-dibenzylaminoxy)silan, Dimethyl-bis(N,N-dibenzylaminoxy)silan oder Tetrakis(N,N-diethylaminoxy)silan ist.

Die Verbindungen der Formel I können in Analogie zu bekannten Verfahren, beispielsweise wie in US 3 448 136 beschrieben, hergestellt werden.

Im allgemeinen erfolgt die Herstellung durch Umsetzung eines Hydroxylamins der Formel II

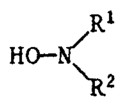 (II)

mit einem Silan der Formel III,

$R_nSi(Hal)_{4-n}$ (III)

wobei R, $R^1$, $R^2$ und n die oben angegebenen Bedeutungen besitzen und Hal Halogen, bevorzugt Chlor, ist. Die Umsetzung kann gegebenenfalls in einem organischen Lösungsmittel, wie beispielsweise Heptan, Cyclohexan, Ether, Benzol, Toluol, Xylol, Methylenchlorid und dergleichen, durchgeführt werden. Als Beispiele für Silane der Formel III seien Tetrachlorsilizium, Dimethyldichlorsilan, Methyltrichlorsilan, Trimethylchlorsilan, Methyl-hydrogen-dichlorsilan und dergleichen genannt. Die Reaktionstemperatur liegt bevorzugt bei 25° bis 140°C. Es ist vorteilhaft, die Reaktion in Gegenwart eines Protonenakzeptors, wie z.B. Triethylamin oder Pyridin, durchzuführen.

Ein alternatives Herstellungsverfahren für Verbindungen der Formel I, worin n 3 ist, ist z.B. die Umsetzung eines Hydroxylamins der Formel II mit einer Verbindung der Formel IV,

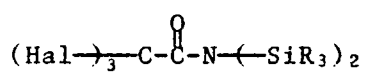 (IV)

worin Hal Halogen, bevorzugt Fluor, ist und R die oben angegebenen Bedeutungen besitzt.

Es ist vorteilhaft, die Reaktion in einem Lösungsmittel, wie z.B. Acetonitril, und bei einer Temperatur von 25° bis 80°C durchzuführen.

In den oben beschriebenen Herstellungsverfahren können die Reagentien in stöchiometrischem Verhältnis oder mit einem Ueberschuss an einem der beiden Reagentien eingesetzt werden.

Die Ausgangsprodukte sind bekannt, teilweise im Handel erhältlich oder können in Analogie zu bekannten Verfahren hergestellt werden.

Die Verbindungen der Formel I eignen sich besonders zum Stabilisieren von synthetischen Polymeren ohne Siliziumatome, natürlich vorkommenden und synthetischen Mineralölen, tierischen und pflanzlichen Fetten, Oelen und Wachsen sowie synthetischen Oelen, Fetten und Wachsen auf Ester-Basis.

Materialien der vorstehenden Art sind:

1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.

3a. Kohlenwasserstoffharze (z.B. $C_5$-$C_9$) inklusive hydrierte Modifikationen davon (z.B. Klebrigmacherharze).

4. Polystyrol, Poly-(p-methylstyrol), Poly-($\alpha$-methylstyrol).

5. Copolymere von Styrol oder $\alpha$-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem underen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol oder $\alpha$-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES Polymere bekannt sind.

7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von $\alpha,\beta$-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

13. Polyphenylenoxide und -sulfide und deren Mischungen mit Styrolpolymeren oder Polyamiden.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Poly-m-phenylen-isophthalamid. Block-Copolymere der vorstehend genannten Polyamide mit Polyolefinen. Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung

kondensierte Polyamide ("RIM-Polyamidsysteme").

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

28. Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.

29. Wässrige Emulsionen natürlicher oder synthetischer Kautschuke, wie z.B. Naturkautschuk-Latex oder Latices von carboxylierten Styrol-Butadien-Copolymeren.

Die Verbindungen der Formel I eignen sich bevorzugt zum Stabilisieren von synthetischen Polymeren ohne Siliziumatome, insbesondere Polyolefinhomopolymeren und -copolymeren.

Besonders bevorzugt werden die Verbindungen der Formel I in Polyolefinen, wie beispielsweise Polyethylen und Polypropylen, Polystyrol, einschliesslich schlagfestem Polystyrol, Acrylnitril-Butadien-Styrol-Harz (ABS), Styrol-Butadien-Kautschuk (SBR), Isopren als auch natürlichem Kautschuk, Polyester, einschliesslich Polyethylenterephthalat und Polybutadienterephthalat sowie deren Copolymeren, und in Schmierölen, die beispielsweise aus Mineralölen hergestellt werden, eingesetzt.

Im allgemeinen können die Verbindungen der Formel I in Konzentrationen von ~0,01 bis ~5 Gew.-%, bezogen auf die stabilisierte Zusammensetzung, eingesetzt werden; allerdings kann je nach Verwendung und Substrat die Stabilisatormenge variieren. Bevorzugt verwendet man ~0,5 bis 2 Gew.-%, insbesondere 0,1 bis 1 Gew. %.

Die Einarbeitung der Verbindungen der Formel I in das Substrat kann nach bekannten Methoden während jeder Verarbeitungsstufe vor der Formgebung erfolgen. Der Stabilisator kann beispielsweise in Pulverform dem Substrat zugemischt werden oder eine Emulsion oder Suspension des Stabilisators kann mit einer Lösung, Suspension oder Emulsion des organischen Materials vermischt werden.

Die stabilisierten Zusammensetzungen dieser Erfindung können gegebenenfalls auch herkömmliche Additive enthalten.

Beispiele für herkömmliche Additive sind:

1. Antioxidantien

1.1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-($\alpha$-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.

1.2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

1.3. Hydroxylierte Thiodiphenylether, z.B. 2,2'-Thio-bis-(6-tert.-butyl-4-methylphenol), 2,2′-Thio-bis-(4-octylphenol), 4,4′-Thio-bis-(6-tert.butyl-3-methylphenol), 4,4′-Thio-bis-(6-tert.butyl-2-methylphenol).

1.4. Alkyliden-Bisphenole, z.B. 2,2′-Methylen-bis-(6-tert.butyl-4-methylphenol), 2,2′-Methylen-bis-(6-tert.butyl-4-ethylphenol), 2,2′-Methylen-bis-[4-methyl-6-(α-methylcyclohexyl)-phenol], 2,2′-Methylen-bis-(4-methyl-6-cyclohexylphenol), 2,2′-Methylen-bis-(6-nonyl-4-methylphenol), 2,2′-Methylen-bis-(4,6-di-tert.butylphenol), 2,2′-Ethyliden-bis-(4,6-di-tert.butylphenol), 2,2′-Ethyliden-bis-(6-tert.butyl-4-isobutylphenol), 2,2′-Methylen-bis-[6-(α-methylbenzyl)-4-nonylphenol], 2,2′-Methylen-bis-[6-(α,α-dimethylbenzyl)-4-nonylphenol], 4,4′-Methylen-bis-(2,6-di-tert.butylphenol), 4,4′-Methylen-bis-(6-tert.butyl-2-methylphenol), 1,1-Bis-(5-tert.-butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3′-tert.butyl-4′-hydroxyphenyl)-butyrat], Bis-(3-tert.butyl-4-hydroxy-5-methylphenyl)-dicyclopentadien, Bis-[2-(3′-tert.butyl-2′-hydroxy-5′-methyl-benzyl)-6-tert.butyl-4-methyl-phenyl]-terephthalat.

1.5 Benzylverbindungen, z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

1.6. Acylaminophenole, z.B. 4-Hydroxy-laurinsäureanilid, 4-Hydroxy-stearinsäureanilid, 2,4-Bis-(octylmercapto)-6-(3,5-di-tert.-butyl-4-hydroxyanilino)-s-triazin, N-(3,5-di-tert.butyl-4-hydroxyphenyl)-carbaminsäureoctylester.

1.7. Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N′-Bis-(hydroxyethyl)-oxalsäurediamid.

1.8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)-ethyl-isocyanurat, N,N′-Bis-(hydroxyethyl)-oxalsäurediamid.

1.9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N′-Bis-(hydroxyethyl)-oxalsäurediamid.

1.10. Amide der β-(3,5-Di-tert.butyl-4-hydroxyphenyl)-propionsäure, wie z.B. N,N′-Bis-(3,5-di-tert.butyl-4-hydroxyphenylpropionyl)-hexamethylendiamin, N,N′-Bis-(3,5-di-tert.butyl-4-hydroxyphenylpropionyl)-trimethylendiamin, N,N′-Bis-(3,5-di-tert.butyl-4-hydroxyphenylpropionyl)-hydrazin.

2. UV-Absorber und Lichtschutzmittel

2.1. 2-(2′-Hydroxyphenyl)-benztriazole, wie z.B. das 5′-Methyl-, 3′,5′-Di-tert.butyl-, 5′-tert.Butyl-, 5′-(1,1,3,3-Tetramethylbutyl)-, 5-Chlor-3′,5′-di-tert.butyl-, 5-Chlor-3′-tert.butyl-5′-methyl-, 3′-sec.Butyl-5′-tert.butyl, 4′-Octoxy-, 3′-5′-Di-tert.amyl-, 3′,5′-Bis-(α,α-dimethylbenzyl)-Derivat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2′,4′-Trihydroxy-, 2′-Hydroxy-4,4′-dimethoxy-Derivat.

2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.-butylphenylester, 3,5-Di-tert.butyl-4-hydroxybenzoesäurehexadecylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2′-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketonoxim, Nickelkomplexe des 1-Phenyl-4-lauroyl-5-hydroxypyrazols, gegebenenfalls mit zusätzlichen Liganden.

2.6. Sterisch gehinderte Amine, wie z.B. Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N′-Bis-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1′-(1,2-Ethandiyl)-bis-(3,3,5,5-tetramethyl-piperazinon).

2.7. Oxalsäurediamide, wie z.B. 4,4′-Di-octyloxy-oxanilid, 2,2′-Di-octyloxy-5,5′-di-tert.butyl-oxanilid, 2,2′-Di-dodecyloxy-5,5′-di-tert.butyl-oxanilid, 2-Ethoxy-2′-ethyl-oxanilid, N,N′-Bis-(3-di-methylaminopropyl)-oxalamid, 2-Ethoxy-5-tert.butyl-2′-ethyloxanilid und dessen Gemisch mit 2-Ethoxy-2′-ethyl-5,4′-di-tert.butyl-oxanilid, Gemische von o-und p-Methoxy- sowie von o- und p-Ethoxy-di-substituierten Oxaniliden.

3. Metalldesaktivatoren, wie z.B. N,N′-Diphenyloxalsäurediamid, N-Salicylal-N′-salicyloylhydrazin, N,N′-Bis-(salicyloyl)-hydrazin, N,N′-Bis-(3,5-di-tert.butyl-4-hydroxyphenylpropionyl)-hydrazin, 3-Salicyloylamino-1,2,4-triazol, Bis-(benzyliden)-oxalsäuredihydrazid.

4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphite, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4′-biphenylen-diphosphonit, 3,9-Bis-(2,4-di-tert.butylphenoxy)-2,4,8,10-tetraoxa-3,9-diphosphaspiro[5.5]-undecan.

5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z.B. 4-tert. Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

Bevorzugt enthalten die Zusammensetzungen dieser Erfindung als zusätzliche Additive ein Metallsalz einer höheren Fettsäure und/oder ein phenolisches Antioxidans.

Die Verbindungen der Formel I eignen sich sowohl allein als auch in Kombination mit anderen Additiven als Stabilisatoren für eine Reihe von Substraten, insbesondere Polyolefinen, die gegebenenfalls Alkalimetall-, Erdalkalimetall- und/oder Aluminiumsalze von höheren Fettsäuren (Beispiele sind die oben unter Punkt 7 aufgeführten Additive) und/oder gehinderte phenolische Antioxidantien enthalten können. Die Aminoxysilane der Formel I vermindern sehr wirksam Verfärbungen, die auf die Anwesenheit von Phenolen zurückzuführen sind. Solche phenolischen Antioxidantien sind beispielsweise: n-Octadecyl-3,5-di-tert-butyl-4-hydroxyhydrocinnamat, Neopentantetrayl-tetrakis(3,5-di-tert-butyl-4-hydroxyhydrocinnamat), Di-n-octadecyl-3,5-di-tert-butyl-4-hydroxybenzylphosphonat, 1,3,5-Tris(3,5-di-tert-butyl-4-hydroxybenzyl)isocyanurat, Thiodiethylen-bis(3,5-di-tert-butyl-4-hydroxyhydrocinnamat), 1,3,5-Trimethyl-2,4,6-tris(3,5-di-tert-butyl-4-hydroxybenzyl)benzol, 3,6-Dioxaoctamethylen-bis(3-methyl-5-tert-butyl-4-hydroxyhydrocinnamat), 2,6-Di-tert-butyl-p-cresol, 2,2′-Ethyliden-bis(4,6-di-tert-butylphenol), 1,3,5-Tris(2,6-dimethyl-4-tert-butyl-3-hydroxybenzyl)-isocyanurat, 1,1,3-Tris(2-methyl-4-hydroxy-5-tert-butylphenyl)butan, 1,3,5-Tris[2-(3,5-di-tert-butyl-4-hydroxyhydrocinnamoyloxy)ethyl]isocyanurat, 3,5-Bis(3,5-di-tert-butyl-4-hydroxybenzyl)mesitol, Hexamethylen-bis-(3,5-di-tert-butyl-4-hydroxyhydrocinnamat), 1-(3,5-Di-tert-butyl-4-hydroxyanilino)-3,5-bis(octylthio)-s-triazin, N,N′-Hexamethylen-bis(3,5-di-tert-butyl-4-hydroxyhydrocinnamamid), Kalzium-bis(ethyl-3,5-di-tert-butyl-4-hydroxybenzylphosphonat), Ethylen-bis[3,3-bis(3-tert-butyl-4-hydroxyphenyl(butyrat], Octyl-3,5-di-tert-butyl-4-hydroxybenzylmercaptoacetat, Bis(3,5-di-tert-butyl-4-hydroxyhydrocinnamoyl)hydrazid und N,N′-Bis[2-(3,5-di-tert-butyl-4-hydroxyhydrocinnamoyloxy)ethyl]oxamid, insbesondere Neopentantetrayl-tetrakis(3,5-di-tert-butyl-4-hydroxyhydrocinnamat), n-Octadecyl-3,5-di-tert-butyl-4-hydroxyhydrocinnamat), 1,3,5-Trimethyl-2,4,6-tris(3,5-di-tert-butyl-4-hydroxybenzyl)benzol, 1,3,5-Tris(3,5-di-tert-butyl-4-hydroxybenzyl)isocyanurat,

2,6-Di-tert-butyl-p-cresol oder 2,2'-Ethyliden-bis(4,6-di-tert-butylphenol).

Die Verbindungen der Formel I verhindern auch Verfärbungen, die auf die Anwesenheit von gehinderten Amin-Lichtstabilisatoren zurückzuführen sind, wie beispielsweise:
Bis(1,2,2,6,6-pentamethyl-4-piperidyl)-2-n-butyl-2-(3,5-di-tert-butyl-4-hydroxybenzyl)malonat, Bis(2,2,6,6-tetramethyl-4-piperidyl)sebacat, Umsetzungsprodukt von Dimethylsuccinat mit 1-Hydroxyethyl-2,2,6,6-tetramethyl-4-hydroxypiperidin und Umsetzungsprodukt von 2,4-Dichloro-6-octylamino-s-triazin mit N,N'-Bis(2,2,6,6-Tetramethyl-4-piperidyl)hexamethylendiamin.

Die folgenden Beispiele erläutern die Erfindung weiter. Alle Mengenangaben beziehen sich auf das Gewicht, sofern nicht anders angegeben.

Beispiel 1: Herstellung von Trimethyl-(N,N-dibenzylaminoxy)silan (Verbindung 1)

Eine Suspension von 15,93 g Dibenzylhydroxylamin in 100 ml Acetonitril wird unter Rühren mit 25,0 g Bis[trimethylsilyl]trifluoracetamid gemischt. Das Reaktionsgemisch wird 30 Minuten in einer Stickstoffatmosphäre bei 80 °C erhitzt, anschliessend auf Raumtemperatur abgekühlt und 8 Stunden gerührt. Das Lösungsmittel wird bei vermindertem Druck entfernt und der Rückstand wird destilliert. Das Produkt fällt als farblose Flüssigkeit an.

| Elementaranalyse: | | | |
|---|---|---|---|
| Berechnet für $C_{17}H_{23}NOSi$:<br>Gefunden: | C 71,5 %;<br>C 70,8 %; | H 8,1 %;<br>H 7,8 %; | N 4,9 %<br>N 5,2 % |

Beispiel 2: Herstellung von Dimethyl-bis[N,N-dibenzylaminoxy)silan (Verbindung 2)

Eine Lösung von 21,23 g Dibenzylhydroxylamin und 20,9 ml Triethylamin in 200 ml Methylenchlorid wird mit einer Lösung von 6,1 ml Dimethyldichlorsilan in 50 ml Methylenchlorid gemischt. Das Lösungsmittel wird bei vermindertem Druck entfernt und der Rückstand wird mit Heptan behandelt. Das unlösliche Triethylamin-Hydrochlorid wird abfiltriert. Die Heptanlösung wird bei vermindertem Druck konzentriert und der Rückstand wird mit Methanol pulverisiert. Das Produkt besitzt einen Schmelzpunkt von 50-53 °C.

| Elementaranalyse: | | | |
|---|---|---|---|
| Berechnet für $C_{30}H_{34}N_2O_2Si$:<br>Gefunden: | C 74,7 %;<br>C 74,8 %; | H 7,1 %;<br>H 7,1 %; | N 5,8 %<br>N 5,8 % |

Beispiel 3: Herstellung von Tetrakis[N,N-diethylaminoxy)silan (Verbindung 3)

Eine Lösung von 17,0 g Siliziumtetrachlorid in 200 ml Heptan wird mit einer Lösung von 73,1 g Diethylhydroxylamin in 50 ml Heptan gemischt. Das Reaktionsgemisch wird bei 55 °C 2 Stunden gerührt und anschliessend auf 10 °C abgekühlt. Das unlösliche Salz wird abfiltriert. Das Filtrat wird bei vermindertem Druck konzentriert und destilliert. Das Produkt liegt als blass-gelbe Flüssigkeit vor.

| Elementaranalyse: | | | |
|---|---|---|---|
| Berechnet für $C_{16}H_{40}N_4O_4Si$:<br>Gefunden: | C 50,5 %;<br>C 50,4 %; | H 10,6 %;<br>H 10,6 %; | N 14,7 %<br>N 14,6 % |

Beispiel 4: Verarbeitungsstabilität von Polypropylen

Die Grundformulierung enthält 100 Teile unstabilisiertes Polypropylen (®Profax 6501, Himont) und 0,1 Teil Kalziumstearat. Die unten angegebenen Stabilisatoren werden in Form einer Lösung dem Polypropylen zugemischt (Lösungsmittel: Methylenchlorid). Das Lösungsmittel wird im Vakuum entfernt. Die stabilisierte Harzformulierung wird bei 100 Umdrehungen pro Minute extrudiert.

| Extrusionsbedingungen: | |
|---|---|
| Zylinder 1 | 232 °C |
| Zylinder 2 | 246 °C |
| Zylinder 3 | 260 °C |
| Düse 1 | 260 °C |
| Düse 2 | 260 °C |
| Düse 3 | 260 °C |

Nach der ersten, dritten und fünften Extrusion werden die Harz-Kügelchen unter Druck bei 193 °C zu 3,2 mm dicken Folien verformt.

Der "Yellowness Index" der Proben wird gemäss ASTM D 1925-63 T bestimmt. Niedrige Werte bedeuten eine geringe Verfärbung. Die Ergebnisse sind in den folgenden Tabellen wiedergegeben.

Der Schmelzindex der Proben wird gemäss ASTM 1238-L bestimmt. Höhere Werte bedeuten eine geringere Molmasse und sind ein Hinweis dafür, dass das Polymer abgebaut ist.

Die Ergebnisse der verschiedenen Testserien sind in den folgenden Tabellen aufgeführt.

Serie 1:

| Stabilisator | "Yellowness Index" nach der 1. Extrusion | 3. Extrusion | 5. Extrusion |
|---|---|---|---|
| ohne | 2,5 | 3,5 | 4,7 |
| 0,1 % Antioxidans A | 7,4 | 13,2 | 15,9 |
| 0,1 % Antioxidans A plus 0,05 % Verbindung 2 | 2,0 | 2,5 | 3,0 |

| Stabilisator | "Schmelzindex" in g/10 min nach der 1. Extrusion | 5. Extrusion |
|---|---|---|
| ohne | 6,3 | 14,9 |
| 0,1 % Antioxidans A | 3,4 | 6,9 |
| 0,1 % Antioxidans A plus 0,05 % Verbindung 2 | 3,2 | 3,8 |

Serie 2:

| Stabilisator | "Yellowness Index" nach der 1. Extrusion | 3. Extrusion | 5. Extrusion |
|---|---|---|---|
| ohne | 1,8 | 2,5 | 3,5 |
| 0,1 % Antioxidans A | 4,6 | 8,9 | 10,9 |
| 0,1 % Antioxidans A plus 0,05 % Verbindung 3 | 2,7 | 4,2 | 4,8 |

| Stabilisator | "Schmelzindex" in g/10 min nach der 1. Extrusion | 5. Extrusion |
|---|---|---|
| ohne | 5,0 | 9,9 |
| 0,1 % Antioxidans A | 2,8 | 4,8 |
| 0,1 % Antioxidans A plus 0,05 % Verbindung 3 | 2,3 | 3,2 |

Serie 3:

| Stabilisator | "Yellowness Index" nach der | | |
|---|---|---|---|
| | 1. Extrusion | 3. Extrusion | 5. Extrusion |
| ohne | -3,5 | -3,4 | -2,7 |
| 0,1 % Antioxidans A | -1,1 | 1,4 | 3,8 |
| 0,1 % Antioxidans A plus 0,05 % Verbindung 1 | -3,9 | -2,9 | -1,0 |

Antioxidans A:
Neopentantetrayl-tetrakis[3,5-di-tert-butyl-4-hydroxyhydrocinnamat]

Beispiel 5: Lichtstabilität von Polypropylen

Unstabilisiertes Polypropylenpulver (®Hercules Profax 6501) wird mit dem in Tabelle 1 angegebenen Additiv gemischt. Diese Mischung wird bei 182 °C 5 Minuten auf einem Mischwalzwerk plastifiziert. Dann löst man die stabilisierte Polypropylenfolie vom Walzwerk ab und lässt sie abkühlen. Die Folie wird in Stücke geschnitten, welche mit einer hydraulischen Presse bei 250 °C und 12 bar zu 0,635 mm dicken Filmen verformt werden.

Die Proben werden in einer "fluorescent sunlight/black light chamber" (FS/BL) belichtet. Der Carbonylgehalt der Prüflinge wird mit IR-Spektroskopie bestimmt. Als Mass für die Wirksamkeit des Stabilisators gilt die Zeit bis zum Erreichen einer Carbonyl-absorption von 0,5. Die Ergebnisse sind in Tabelle 1 aufgeführt.

Tabelle 1:

| Stabilisator | Stunden bis zum Erreichen einer Carbonyl-absorption von 0,5 |
|---|---|
| ohne | 100 |
| 0,2 % Verbindung 1 | 250 |

## Patentansprüche

1. Zusammensetzung enthaltend a) ein gegen oxidativen, thermischen und/oder aktinischen Abbau empfindliches synthetisches Polymer ohne Siliziumatome, oder ein natürlich vorkommendes oder synthetisches Mineralöl, oder ein tierisches oder pflanzliches Fett, Oel oder Wachs oder ein synthetisches Oel, Fett oder Wachs auf Ester-Basis und b) mindestens eine Verbindung der Formel I,

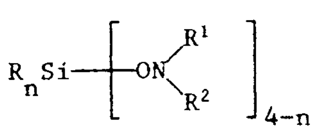

(I)

worin n die Zahl 0, 1, 2 oder 3 darstellt und R, $R^1$ und $R^2$ unabhängig voneinander Wasserstoff, $C_1$-$C_{36}$-

Alkyl, $C_5$-$C_{12}$-Cycloalkyl, $C_7$-$C_9$-Aralkyl oder durch $C_1$-$C_{36}$-Alkyl substituiertes $C_7$-$C_9$-Aralkyl bedeuten.

**2.** Zusammensetzung gemäss Anspruch 1, worin $R^1$ und $R^2$ unabhängig voneinander Wasserstoff, $C_1$-$C_{18}$-Alkyl, Cyclopentyl, Cyclohexyl, Benzyl, $\alpha$-Methylbenzyl oder $\alpha,\alpha$-Dimethylbenzyl sind.

**3.** Zusammensetzung gemäss Anspruch 1, worin $R^1$ und $R^2$ Benzyl bedeuten.

**4.** Zusammensetzung gemäss Anspruch 1, worin R $C_1$-$C_{18}$-Alkyl ist.

**5.** Zusammensetzung gemäss Anspruch 1, worin die Verbindung der Formel I Trimethyl-(N,N-dibenzylaminoxy)silan, Dimethyl-bis(N,N-dibenzylaminoxy)silan oder Tetrakis(N,N-diethylaminoxy)silan ist.

**6.** Zusammensetzung gemäss Anspruch 1, worin die Komponente a) ein synthetisches Polymer ohne Siliziumatome ist.

**7.** Zusammensetzung gemäss Anspruch 6, worin das synthetische Polymer ein Polyolefinhomopolymer oder -copolymer ist.

**8.** Zusammensetzung gemäss Anspruch 1, die zusätzlich ein Metallsalz einer höheren Fettsäure und/oder ein phenolisches Antioxidans enthält.

**9.** Zusammensetzung gemäss Anspruch 8, worin das phenolische Antioxidans Neopentantetrayl-tetrakis-(3,5-di-tert-butyl-4-hydroxyhydrocinnamat), n-Octadecyl-3,5-di-tert-butyl-4-hydroxyhydrocinnamat), 1,3,5-Trimethyl-2,4,6-tris(3,5-di-tert-butyl-4-hydroxybenzyl)benzol, 1,3,5-Tris(3,5-di-tert-butyl-4-hydroxybenzyl)isocyanurat, 2,6-Di-tert-butyl-p-cresol oder 2,2'-Ethyliden-bis(4,6-di-tert-butylphenol) ist.

**10.** Verwendung von Verbindungen der Formel I gemäss Anspruch 1 zum Stabilisieren von synthetischen Polymeren ohne Siliziumatome, oder eines natürlich vorkommenden oder synthetischen Mineralöls, oder eines tierischen oder pflanzlichen Fettes, Oels oder Wachs oder eines synthetischen Oels, Fettes oder Wachs auf Ester-Basis.

## Claims

**1.** A composition comprising a) a synthetic polymer which has no silicon atoms and is sensitive to oxidative, thermal and/or actinic degradation or a naturally occurring or synthetic mineral oil, or an animal or vegetable fat, oil or wax or a synthetic ester-based oil, fat or wax and b) at least one compound of the formula (I)

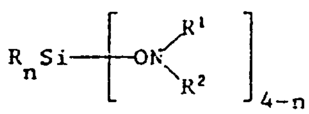

(I)

in which n is the number 0, 1, 2 or 3 and R, $R^1$ and $R^2$ are, independently of one another, hydrogen, $C_1$-$C_{36}$alkyl, $C_5$-$C_{12}$cycloalkyl, $C_7$-$C_9$aralkyl or $C_7$-$C_9$aralkyl substituted by $C_1$-$C_{36}$alkyl.

**2.** A composition according to claim 1, wherein $R^1$ and $R^2$ are independently of one another, hydrogen, $C_1$-$C_{18}$alkyl, cyclopentyl, cyclohexyl, benzyl, $\alpha$-methylbenzyl or $\alpha,\alpha$-dimethylbenzyl.

**3.** A composition according to claim 1, wherein $R^1$ and $R^2$ are benzyl.

**4.** A composition according to claim 1, wherein R is $C_1$-$C_{18}$alkyl.

**5.** A composition according to claim 1, wherein the compound of the formula I is trimethyl(N,N-dibenzylaminoxy)silane, dimethylbis(N,N-dibenzylaminoxy)silane or tetrakis(N,N-diethylaminoxy)silane.

**6.** A composition according to claim 1, wherein component a) is a synthetic polymer which has no silicon atoms.

**7.** A composition according to claim 6, wherein the synthetic polymer is a polyolefin homopolymer or copolymer.

**8.** A composition according to claim 1, which additionally contains a metal salt of a higher fatty acid and/or a phenolic antioxidant.

**9.** A composition according to claim 8, wherein the phenolic antioxidant is neopentanetetrayl tetrakis(3,5-di-tert-butyl-4-hydroxyhydrocinnamate),n-octadecyl 3,5-di-tert-butyl-4-hydroxyhydrocinnamate, 1,3,5-trimethyl-2,4,6-tris(3,5-di-tert-butyl-4-hydroxybenzyl)benzene, 1,3,5-tris(3,5-di-tert-butyl-4-hydroxybenzyl) isocyanurate, 2,6-di-tert-butyl-p-cresol or 2,2'-ethylidenebis(4,6-di-tert-butylphenol).

**10.** The use of a compound of the formula I according to claim 1 for stabilizing a synthetic polymer which has no silicon atoms or a naturally occurring or synthetic mineral oil or an animal or vegetable fat, oil or wax or a synthetic ester-based oil, fat or wax.

**Revendications**

**1.** Composition contenant a) un polymère synthétique sensible à la dégradation par oxydation, thermique, et/ou actinique, ne contenant pas d'atomes de silicium, ou une huile minérale naturelle ou synthétique, ou une cire ou une huile ou une graisse d'origine animale ou végétale, ou une cire, une graisse ou une huile synthétique à base d'ester et b) au moins un composé de formule I

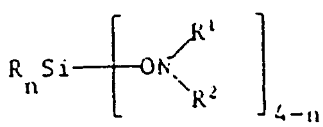

(I)

dans laquelle n vaut 0, 1, 2 ou 3 et R, $R^1$ et $R^2$ indépendamment les uns des autres, représentent un atome d'hydrogène, un groupe alkyle en $C_1$-$C_{36}$, un groupe cycloalkyle en $C_5$-$C_{12}$, un groupe aralkyle en $C_7$-$C_9$ ou un groupe aralkyle en $C_7$-$C_9$ substitué par des groupes alkyle en $C_1$-$C_{36}$.

**2.** Composition selon la revendication 1, dans laquelle $R^1$ et $R^2$, indépendamment l'un de l'autre, représentent un atome d'hydrogène, un groupe alkyle en $C_1$-$C_{18}$, un groupe cyclopentyle, un groupe cyclohexyle, un groupe benzyle, un groupe $\alpha$-méthylbenzyle, ou un groupe $\alpha$,$\alpha$-diméthylbenzyle.

**3.** Composition selon la revendication 1, dans laquelle $R^1$ et $R^2$ signifient des groupes benzyle.

**4.** Composition selon la revendication 1, caractérisée en ce que R représente un radical alkyle en $C_1$-$C_{18}$.

**5.** Composition selon la revendication 1, dans laquelle le composé de formule I est le triméthyl-(N,N-dibenzylaminoxy)silane, le diméthyl-bis(N-N-dibenzylaminoxy)silane ou le tétrakis(N,N-diéthylaminoxy)-silane.

**6.** Composition selon la revendication 1, dans laquelle le composant a) est un polymère synthétique ne contenant pas d'atomes de silicium.

**7.** Composition selon la revendication 6, dans laquelle le polymère synthétique est un homopolymère ou un copolymère de polyoléfine.

**8.** Composition selon la revendication 1, qui contient de plus un sel métallique d'un acide gras supérieur et/ou un antioxydant phénolique.

**9.** Composition selon la revendication 8, dans laquelle l'antioxydant phénolique est le néopentanetétrayl-tétrakis(3,5-di-tert-butyl-4-hydroxyhydrocinnamate), n-octadécyl-3,5-di-tert-butyl-4-hydroxy-hydrocinnamate), 1,3,5-triméthyl-2,4,6-tris(3,5-di-tert-butyl-4-hydroxybenzyl)benzène, 1,3,5-tris(3,5-di-tert-butyl-4-hydroxy-benzyl)isocyanurate, 2,6-di-tert-butyl-p-crésol ou 2,2'-éthylidène-bis(4,6-di-tert-butylphénol).

**10.** Utilisation des composés de formule I selon la revendication 1 pour la stabilisation de polymères synthétiques ne contenant pas d'atomes de silicium ou d'une huile minérale naturelle ou synthétique, ou d'une cire ou d'une huile ou d'une graisse d'origine animale ou végétale, ou d'une cire, ou d'une graisse ou d'une huile synthétique à base d'ester.